# EUROPEAN PATENT SPECIFICATION

(11) **EP 3 536 572 B1**
(45) Date of publication and mention of the grant of the patent: **03.03.2021**
(21) Application number: 18159976.2
(22) Date of filing: 05.03.2018
(51) Int. Cl.: B60T 17/08

(54) **BRAKE PISTON FOR A PNEUMATIC BRAKE ACTUATOR OF A VEHICLE, IN PARTICULAR COMMERCIAL VEHICLE, BRAKE ACTUATOR HAVING THE SAME, AND METHOD OF PRODUCING A BRAKE PISTON**
BREMSKOLBEN FÜR EIN PNEUMATISCHES BREMSZYLINDERSTELLGLIED EINES FAHRZEUGES, INSBESONDERE NUTZFAHRZEUGES, BREMSSTELLGLIED MIT DIESEM UND VERFAHREN ZUR HERSTELLUNG EINES BREMSKOLBENS
PISTON DE FREIN POUR UN ACTIONNEUR DE FREIN PNEUMATIQUE D'UN VÉHICULE, EN PARTICULIER UN VÉHICULE UTILITAIRE, ACTIONNEUR DE FREIN LE COMPORTANT ET PROCÉDÉ DE PRODUCTION D'UN PISTON DE FREIN

(43) Date of publication of application: 11.09.2019
(73) Proprietor: WABCO Europe BVBA, 1170 Brussels (BE)
(72) Inventor: Franz, Janusz, 51-152 Wroclaw (PL); Lesko, Piotr, 46-203 Kluczbork (PL)
(74) Representative: Copi, Joachim

(56) References cited:
- WO-A1-01/81728
- DE-A1- 3 603 145
- US-A- 6 012 378

## Description

The present invention relates to a brake piston for a pneumatic brake actuator of a vehicle, in particular a commercial vehicle, wherein the brake piston comprises a piston head, and a piston rod coupled to the piston head.

Brake pistons of the aforementioned type are typically used in pneumatic brake actuators either to transfer the spring force of a compression spring in a spring brake portion of a spring brake actuator towards a brake mechanism, or as service brake pistons in order to transfer the service brake force from a service brake pressure chamber towards a brake mechanism. The brake pistons have, for both of the aforementioned functionalities to be able to withstand a substantial number of braking cycles without mechanical failure. Also, the aforementioned brake pistons have to fulfill rigorous safety requirements since their malfunction or failure will usually lead to a loss of brake performance which can be a serious cause of accidents.

Particular care must therefore be taken when coupling the piston head, which receives the pressure either from the compression spring or the service brake pressure chamber, to the piston rod which ultimately transfers the braking force resulting from the actuating pressure to the brake mechanism.

In the prior art, several types of coupling of the piston head to the piston rod have been established. One such technology consists of welding a cylindrical piston rod to a substantially planar piston head. When using exclusively welding for coupling the piston rod to the piston head, it must be ensured that stress concentration in and around the weld are kept at a low level in order to prevent critical failure such as breakage of the piston. The latter may occur in case of poor weld quality. The welding process is very sensitive to a plurality of factors which have to be controlled at all times. This leads to comparatively high manufacturing costs.

An alternative technology commonly used for coupling the piston head to the piston rod is the use of friction welding. In order to maintain a sufficient quality during manufacturing procedures, overheating of the rod during joining has to be prevented. This also contributes to relatively high costs for conducting the joining process, which can at least partly be traced back to tooling requirements and extensive manufacturing knowledge

WO0181728A1 relates to spring brake actuators as used by large vehicles having pneumatic braking systems which include a power spring and serve as an emergency brake and a parking brake. The improved spring brake actuator combines the advantages of diaphragm and piston-type spring brake actuators,including improved performance, reduced cost and reduced size. The spring brake actuator includes a generally cup-shaped housing, which may be the upper portionof a flange case, a cover portion having a rim portion secured to a rim portion of the housing, forming an enclosed spring or emergency chamber, a reciprocal piston located within the spring chamber having a peripheral rim portion spaced from an internal surface of the spring chamber, a power spring located within the spring chamber, between the cover and the piston, and a tubular flexible diaphragm having one end portion secured between the rim portions of the housing and the cover and a second end portion received around and secured in sealed relation to the peripheral rim portion of the piston to reciprocate with the piston when the power spring expands to brake the vehicle.

DE 3603145 A1 discloses a pneumatic brake actuator wherein the piston head and the piston rod are coupled to one another in a press fit portion.

A further way of coupling the piston head and the piston rod to one another in the prior art has been the use of threaded connections. In order to provide sufficient material reserves for adding the threads, the required diameters of the piston rod and the thickness of the piston plate had to be made thicker than would principally be necessary for transmitting the pressure/braking force. Also the number of parts required is higher than ideal, leading to comparatively high manufacturing costs.

As a consequence, it was object of the invention to provide a brake piston of the initially mentioned type which overcomes the aforementioned problems as much as possible. In particular, it was an object of the invention to provide an improved brake piston that provides the same or better safety against failure while at the same time being as cost-efficient or more cost-efficient to manufacture. In the least, it was an object of the invention to provide an alternative brake piston.

The invention attains the aforementioned object by suggesting a brake piston according to claim 1. According to the invention, the piston head and the piston rod are coupled to one another in a press fit portion. The invention is based upon the realization that a press fit can be established between two parts very quickly and without incurring overheating problems. The time span in which the press fit is created is short such that the manufacturing procedure is quick and inexpensive. Also, high forces can be transmitted through the press fit. Furthermore, the area of contact between the piston head and the piston rod, due to the nature of the press fit, is significantly larger than in traditional welding connections, leading to a dramatically increased safety factor of the brake piston. At the same time, the material cost and cost of manufacturing are kept at manageable levels, providing for a very attractive alternative with respect to the prior art.

In a preferred embodiment of the invention, the piston head comprises a head plate, and a bushing having an inner press fit surface that is dimensioned such that a corresponding outer press fit surface of the piston rod engages the bushing in the interference fit. Preferably, the inner diameter of the bushing is smaller than the outer diameter of the corresponding portion of the piston rod.

In a further preferred embodiment, the bushing is formed as a tubular projection extending away from the head plate. Preferably, the bushing and the head plate are integrally formed, for example by a metal forming process. For example, the head plate could be produced together with the bushing by punching or deep drawing the head plate.

According to the invention, the head plate has a material thickness in the range of 5 mm or less. Using such a thin head plate is made possible by using the press fit as coupling means between the piston head and the piston rod. Advantageously, the overall weight of the brake actuator is reduced thus and material cost efficiency is improved without compromising the safety factor of the component.

According to the invention, the embodiment of the brake piston, that brake piston comprises an auxiliary material bond between the piston rod and the piston head. If desired, for example in order to meet ever higher safety requirements, the press fit can additionally be secured with an auxiliary bonding of the piston rod material and the piston head material. According to the invention, the auxiliary material bond is a weld, glue or soldering seam. According to the invention, the auxiliary material bond is separate from, preferably adjacent to, the press fit. While already being reliably held together by the interference fit, the auxiliary material bond can thus provide an additional and precautionary coupling of the two parts together, to safeguard against extreme loads and situations.

According to a first preferred alternative, the auxiliary material bond extends completely circumferentially around the piston rod and bushing.

According to a second preferred alternative, the auxiliary material bond consists of at least one or a plurality of bonding sections, for example weld spots, wherein each of the bonding sections extend only a long a portion the circumference around the piston rod and bushing. Hereby, additional weight and manufacturing time is saved.

In the embodiments involving welding as auxiliary material bond, the auxiliary material bond is preferably a fillet weld or fillet weld spot.

The piston rod preferably has a solid cylindrical shape. Alternatively, the piston rod preferably has a tubular shape along at least a part of its longitudinal axis such that the piston rod is at least partially shaped as a hollow rod.

The invention has herein above been described according to a first aspect relating to the inventive brake piston. According to a second aspect, the invention however also relates to a pneumatic brake actuator for a vehicle, in particular a commercial vehicle, comprising an actuator housing having a brake pressure chamber, a piston chamber and a brake piston that is mounted inside the piston chamber and configured to move between a retained position and an extended position.

The invention suggests that the pneumatic brake actuator of the aforementioned type comprises a brake piston that is formed according to anyone of the previously described preferred embodiments.

The inventive brake actuator accordingly shares the technical advantages and preferred embodiments of the inventive brake piston. In this regard, reference is made to the description above and preferred embodiments described hereinafter.

In a preferred embodiment, the brake pressure chamber is a service brake pressure chamber and the piston chamber is a service brake piston chamber, wherein the brake actuator further comprises a diaphragm that separates the brake pressure chamber from the brake piston chamber and is elastically moveable as a function of pressure inside the brake pressure chamber, wherein the piston head of the brake piston engages the diaphragm, and the piston rod extends away from the diaphragm towards the extended position. Upon pressurization of the brake pressure chamber, the diaphragm is elastically deformed such that the brake pressure chamber volume increases, and the diaphragm pushes the service brake piston towards its extended position such that the piston rod may transmit a braking force to an externally coupled brake mechanism. The service brake piston preferably is biased with a return spring against the diaphragm such that upon releasing the service brake pressure chamber, the brake piston is moved back towards its retained position.

In another preferred embodiment, the brake actuator additionally or alternatively has a spring brake portion wherein the spring brake piston is formed according to anyone of the preferred embodiments described herein above.

In a brake actuator having a service portion and a spring brake portion, preferably at least one or both of the brake pistons are formed in accordance with one of the aforementioned preferred embodiments.

According to a further aspect, the invention relates to a method of producing a brake piston for a pneumatic brake actuator, in particular a brake piston of anyone of the preferred embodiments described herein above, the method comprising steps of:
- providing or producing a piston rod having a press fit surface,
- providing or producing a piston head having a bushing, the bushing having a press fit surface, and
- mating the piston rod and piston head such that the press fit surfaces of the piston rod and piston head overlap at least partially, leading to a press fit portion between the piston rod and the piston head.

The method further comprises the step of adding an auxiliary material bond between the piston rod and piston head after the mating step, wherein the auxiliary material bond preferably is a weld, glue or soldering seam extending at least partially around the piston rod and bushing.

The method further comprises, the auxiliary material bond is placed separate from, preferably adjacent; the press fit surfaces of the piston rod and piston head.

For a more complete understanding of the invention, the invention will now be described in more detail with reference to the accompanying drawings. The detailed description will illustrate and describe or is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and disclaimed hereinafter. Further, the features described in the description, the drawings and the claims disclosing the invention may be essential for the invention considered alone or in combination. In particular, any reference signs in the claims shall not be construed as limiting the scope of the invention. The word "comprising" does not exclude other elements or steps. The wording "a" or "an" does not exclude a plurality.

In brief, the figures in which reference will be made show:
- Fig. 1: a brake piston according to a preferred embodiment,
- Fig. 2: a partial view of the brake piston of Fig. 1, and
- Fig. 3: a brake actuator in a schematic cross factional view according to a preferred embodiment.

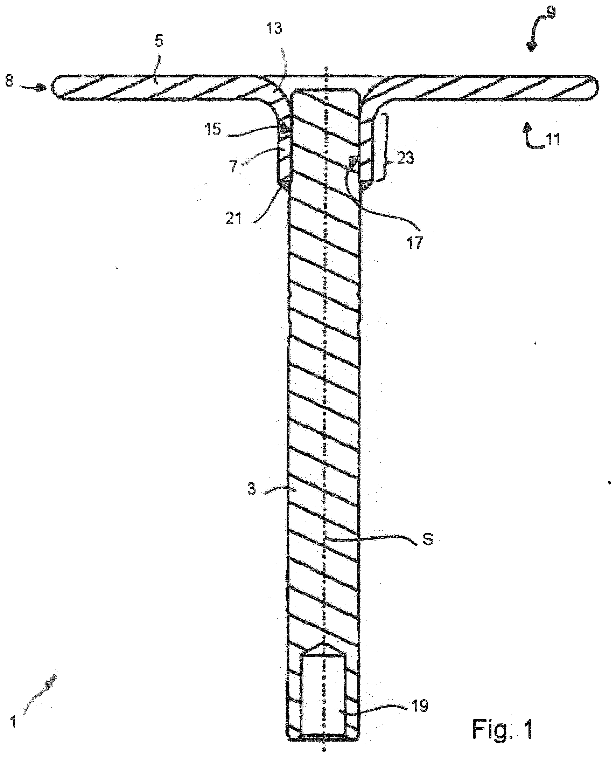

A brake piston 1 according to a preferred embodiment is shown in Fig. 1. The brake piston 1 comprises a piston rod 3 and a piston head 5. The piston head 5 and the piston rod 3 are coupled to one another in a press fit. In order to optimally accomplish the press fit, the piston head 5 comprises a bushing 7 that is integrally formed with a head plate 8 of the piston head 5. The bushing 7 comprises a recess with an (inner) press fit surface 15, the diameter of which is dimensioned to be smaller than the diameter of a corresponding (outer) press fit surface 17 of the piston rod 3. The press fit surface 17 of the piston rod 3 is pressed onto the press fit surface 15 of the piston head 5. Once set, high forces can be transmitted in the direction of a stroke axis S by virtue of the press fit.

The piston rod 3 shown in fig. 1 is a shaped as a solid cylindrical body. Optionally, however, the piston rod may alternatively be shaped partially or fully as a hollow rod, i.e. at least partially having a tubular shape.

The piston rod 3 and the piston head 5 are coupled in an overlap forming a press fit portion 23. The press fit portion 23 is dimensioned such that axial force and tilting moments away from the stroke access S are reliably absorbed.

The piston head 5 comprises a curved transition 13 in between the head plate 8 and the bushing 7 to minimize stress concentration.

Opposite of the piston head 5, the brake piston 1 comprises a connection interface 19 which is configured to couple with e.g. an external brake mechanism or other hardware depending on the field of use the brake piston 1.

The head plate 8 is substantial planar on a first end face 9 facing away from the piston rod 3. A second end face 11 extending oppositely of the first end face 9 towards the piston rod 3 is preferably also substantially planar. Optionally, stiffening ribs may extend from the thinned end face 11 to the bushing 7 (are however not shown in favor of more clearly depicting the bushing 7 itself). Adjacent to the press fit between the recess 15 and the corresponding portion 17 the piston rod 3, an auxiliary material bond 21 is provided which extends at least partially in the circumferential direction around the piston rod 3 and the bushing 7 in order to provide additional safeguard against in advertent loosening of the piston rod 3 from the piston head 5. The auxiliary material bond 21 preferably is either a weld or plurality of weld sports distributed along with circumference of the bushing 7. Preferably the weld is formed as a fillet weld. Other preferred auxiliary material bonds include at least one glue bead or at least one soldering seam.

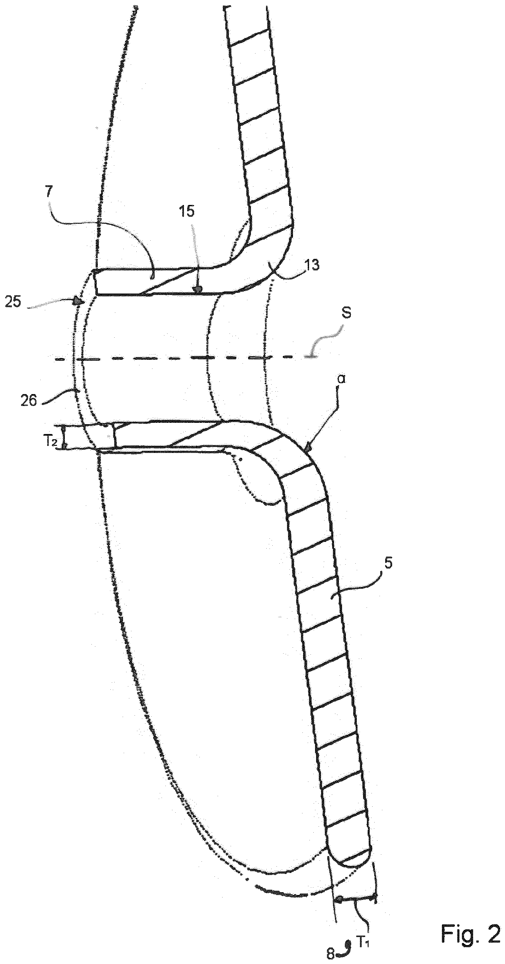

Fig. 2 shows a detail of the brake piston 1 of Fig.1, namely the piston head 5. The head plate 8 comprises a first thickness T₁. The bushing 7 comprises a second thickness T₂. Preferably, the second thickness T₂ is smaller than the first thickness T₁. Particularly preferred, the thickness is continuously, i.e. steplessly reduced from T₁ to T₂ along the transition 13, said transition having a radius R. The bushing 7 and recess 15 are preferably formed in a metal forming procedure, e.g. by punching or deep drawing. On an end portion 25 of the bushing 7 facing away from the head plate 8, the piston head 5 comprises a surface 26 that is configured for accepting the auxiliary material bond. Preferably, the surface 26 is substantially planar. Depending on the type of material bond that is chosen to be applied, the surface 26 comprises a predefined roughness, and is preferably free of residues such as grease, oil, water and debris.

In preferred embodiments, the thickness T₁ is in a range of 10 mm or less, whereas the thickness T₂ is in a range of 8 mm or less.

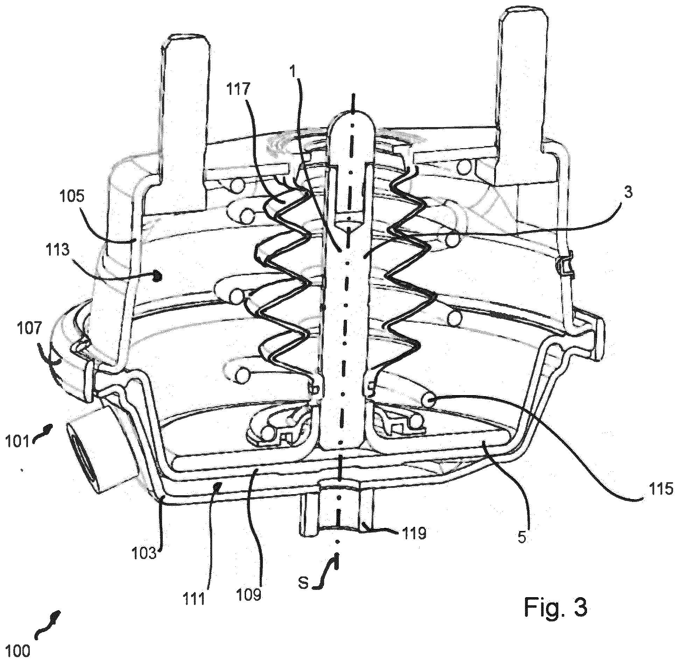

While figure 2 and figure 1 show the brake piston 1 itself, figure 3 gives a clearer view on a possible mounted state of the brake piston 1. In particular, figure 3 shows a brake actuator 100 having an actuator housing 101. The actuator housing 101 comprises a first housing part 103, a second housing part 105 and a clamp 107 fixedly and sealingly holding the first and second housing parts 103, 105 together.

In between the first a second housing parts 103, 105, the actuator 100 comprises an elastically deformable diaphragm 109 which sealingly separates a pressure chamber 111 from a piston chamber 113.

In the shown embodiment, the brake actuator 100 is a service brake actuator, and the pressure chamber 111 is a service brake pressure chamber which is defined between the first housing part 103 and the diaphragm 109. The second housing part 105 and the diaphragm 109 in turn define the piston chamber 113 as a service piston chamber. Inside the piston chamber 113, the brake piston 1 of figure 1 and 2 is mounted and moveable back and forth between a retained position (shown) and an extended position (not shown). In other words, the piston is configured to reciprocate between the retained position and the extended position. The brake piston 1 moves along the stroke axis S between those two positions as a function of pressure inside the pressure chamber 111.

The piston rod 3 of the brake piston 1 is shielded against the piston chamber 113 by a gaiter 117.

A return spring 115 which is mounted on the second housing part 105 biases the brake piston 1 towards the diaphragm 109 and is configured to push against the piston head 5, in particular such that in the absence of pressure in the pressure chamber 111, the brake piston 1 is returned towards the retained position.

On the first housing part 103, a connecting socket 119 is provided which can for example be used to couple a second brake piston, preferably a spring brake piston, from a spring brake actuator to the brake actuator 100.

With reference to in particular to figures 1 and 2, a preferred way of manufacturing the brake piston 1 will now be described.

Initially, it is suggested to provide or produce a piston rod having a first end portion with a press fit surface 17. Also, it is suggested to provide or produce a piston head 5 having a bushing 7, the bushing having a recess with a press fit surface 15. After providing or producing those two parts, the piston rod 3 and the piston head 5 are mated such that the press fit surfaces of the piston rod 3 and the piston head 5 overlap at least partially, namely in an overlap forming a press fit portion 23, leading to a press fit between the piston rod 3 and the piston head 5. Optionally, after mating the piston rod 3 to the piston head 5, an auxiliary material bond 21 is added between the piston rod 3 and the piston head 5 after the mating step. To accomplish this, the material bond is preferably applied in the form of at least one weld, glue bead or soldering seam extending at least partially around the piston rod 3 and bushing 7. Preferably, the bushing 7 and recess having the press fit surface 15 are not in the final physical shape prior to the mating step. It is particularly preferred to deform the piston head 5 in the zone of the bushing 7 with the piston rod 3 during the mating step.

As can be seen from the explanations above, the invention suggests an extremely lean yet effective way of producing a brake piston for various types of brake actuators for vehicles, in particular commercial vehicles. The brake piston can thus be manufactured cost-efficiently, while at the same time providing more than satisfactory operational safety.

### List of references (Part of desription)

- 1: brake piston
- 3: piston rod
- 5: piston head
- 7: bushing
- 8: head plate
- 9: first end face
- 11: second end face
- 13: transition
- 15: press fit surface
- 17: press fit surface
- 19: connection interface
- 21: auxiliary material bond
- 25: endface, bushing
- 26: surface, endface
- 100: brake actuator
- 101: actuator housing
- 103: first housing part
- 105: second housing part
- 107: clamping ring
- 109: diaphragm
- 111: pressure chamber
- 113: piston chamber
- 115: return spring
- 117: gaiter
- 119: connection socket
- R: radius
- S: stroke access
- T₁: thickness, headplate
- T₂: thickness, bushing

## Claims

1. A brake piston (1) for a pneumatic brake actuator (100) of a vehicle, in particular commercial vehicle, wherein the brake piston comprises
- a piston head (5), and
- a piston rod (3) coupled to the piston head (5),
**characterized in that** the piston head (5) and the piston rod (3) are coupled to one another in a press fit portion (23), wherein a head plate (8) has a material thickness T₁ in the range of 5 mm or less, wherein the brake piston (1) comprising an auxiliary material bond (21) between the piston rod (3) and the piston head (5), wherein the auxiliary material bond (21) is a weld, glue or soldering seam wherein the auxiliary material bond (21) being separate from, preferably adjacent to, the press fit portion (23).

2. The brake piston (1) of claim 1,
wherein the piston head (5) comprises the head plate (8), and a bushing (7) having an inner press fit surface (15) that is dimensioned such that a corresponding outer press fit surface (17) of the piston rod (3) engages the bushing (7) in the interference fit.

3. The brake piston of claim 2,
wherein the bushing (7) is formed as a tubular projection extending away from the head plate (8).

4. The brake piston of claim 2 or 3,
wherein the bushing (7) and the head plate (8) are integrally formed.

5. The brake piston of any one of claims 1 to 4,
wherein the auxiliary material bond (21) extends completely circumferentially around the piston rod (3) and bushing (7).

6. The brake piston of any one of claims 1 to 4,
wherein the auxiliary material bond (21) consists of at least one or a plurality of bonding sections, wherein each of the bonding sections extend only along a portion of the circumference around the piston rod (3) and bushing (7).

7. The brake piston of any one of claims 1 to 6,
wherein the auxiliary material bond (21) is a fillet weld.

8. A pneumatic brake actuator (100) for a vehicle, in particular a commercial vehicle, comprising
- an actuator housing (101) having a brake pressure chamber (111), a piston chamber (113),
and
- a brake piston (1) that is mounted inside the piston chamber (113) and configured to move between a retained position and an extended position, **characterized in that** the brake piston (1) is formed according to any one of the preceding claims.

9. The pneumatic brake actuator of claim 8,
wherein the brake pressure chamber (111) is a service brake pressure chamber and the piston chamber (113) is a service brake piston chamber, and
the brake actuator (100) further comprises
- a diaphragm (109) that separates the brake pressure chamber (111) from the brake piston chamber (113) and is elastically moveable as a function of pressure inside the brake pressure chamber (111), wherein the piston head (5) of the brake piston (1) engages the diaphragm (109), and the piston rod (3) extends away from the diaphragm (109) towards the extended position.

10. A method of producing a brake piston (1) for a pneumatic brake actuator (100), in particular a brake piston (1) of any one of claims 1 to 9, the method comprising the steps of:
- providing or producing a piston rod (3) having a press fit surface (17),
- providing or producing a piston head (5) having a bushing (7), the bushing (7) having a press fit surface (15), and
- mating the piston rod (3) and piston head (5) such that the press fit surfaces (15,17) of the piston rod (3) and piston head (5) overlap at least partially, leading to a press fit portion (23) between the piston rod (3) and the piston head (5),
- providing a head plate (8) which has a material thickness T₁ in the range of 5 mm or less,
- adding an auxiliary material bond (21) between the piston rod (3) and piston head (5) after the mating step, wherein the auxiliary material bond (21) preferably is a weld, glue or soldering seam extending at least partially around the piston rod (3) and bushing (5),- wherein the auxiliary material bond (21) is placed separate from, preferably adjacent to, the press fit surfaces (15,17) of the piston rod (3) and piston head (5).

## Patentansprüche

1. Bremskolben (1) für ein pneumatisches Bremszylinderstellglied (100) eines Fahrzeugs, insbesondere Nutzfahrzeugs, wobei der Bremskolben umfasst:
- einen Kolbenkopf (5), und
- eine Kolbenstange (3), die mit dem Kolbenkopf (5) gekoppelt ist;
**dadurch gekennzeichnet, dass** der Kolbenkopf (5) und die Kolbenstange (3) in einem Presspassungsabschnitt (23) miteinander gekoppelt sind, wobei eine Kopfplatte (8) eine Materialstärke T₁ im Bereich von 5 mm oder weniger aufweist, wobei der Bremskolben (1) eine Hilfsmaterialverbindung (21) zwischen der Kolbenstange (3) und dem Kolbenkopf (5) aufweist, wobei die Hilfsmaterialverbindung (21) eine Schweiß-, Klebe- oder Lötnaht ist, wobei die Hilfsmaterialverbindung (21) getrennt von dem Presspassungsabschnitt (23), vorzugsweise daran angrenzend, ist.

2. Bremskolben (1) gemäß Anspruch 1,
wobei der Kolbenkopf (5) die Kopfplatte (8) und eine Buchse (7) mit einer inneren Presspassungsfläche (15) aufweist, die so dimensioniert ist, dass eine entsprechende äußere Presspassungsfläche (17) der Kolbenstange (3) in der Presspassung an der Buchse (7) anliegt.

3. Bremskolben gemäß Anspruch 2,
wobei die Buchse (7) als rohrförmiger Vorsprung ausgebildet ist, der sich von der Kopfplatte (8) weg erstreckt.

4. Bremskolben gemäß Anspruch 2 oder 3,
wobei die Buchse (7) und die Kopfplatte (8) einstückig ausgebildet sind.

5. Bremskolben gemäß einem der Ansprüche 1 bis 4, wobei sich die Hilfsmaterialverbindung (21) vollständig in Umfangsrichtung um die Kolbenstange (3) und Buchse (7) erstreckt.

6. Bremskolben gemäß einem der Ansprüche 1 bis 4, wobei die Hilfsmaterialverbindung (21) aus mindestens einem oder einer Vielzahl von Verbindungsabschnitten besteht, wobei sich jeder der Verbindungsabschnitte nur entlang eines Abschnitts des Umfangs um die Kolbenstange (3) und die Buchse (7) erstreckt.

7. Bremskolben gemäß einem der Ansprüche 1 bis 6, wobei die Hilfsmaterialverbindung (21) eine Kehlschweißnaht ist.

8. Pneumatisches Bremszylinderstellglied (100) für ein Fahrzeug, insbesondere Nutzfahrzeug, umfassend:
- ein Stellgliedgehäuse (101) mit einer Bremsdruckkammer (111), einer Kolbenkammer (113)
und
- einen Bremskolben (1), der innerhalb der Kolbenkammer (113) montiert und dazu ausgelegt ist, sich zwischen einer Haltestellung und einer ausgefahrenen Stellung zu bewegen, **dadurch gekennzeichnet, dass** der Bremskolben (1) gemäß einem der vorhergehenden Ansprüche ausgebildet ist.

9. Pneumatisches Bremszylinderstellglied gemäß Anspruch 8,
wobei die Bremsdruckkammer (111) eine Betriebsbremsdruckkammer ist und die Kolbenkammer (113) eine Betriebsbremskolbenkammer ist und
das Bremszylinderstellglied (100) ferner umfasst:
- eine Membran (109), die die Bremsdruckkammer (111) von der Bremskolbenkammer (113) trennt und in Abhängigkeit vom Druck innerhalb der Bremsdruckkammer (111) elastisch bewegbar ist, wobei der Kolbenkopf (5) des Bremskolbens (1) an der Membran (109) angreift und die Kolbenstange (3) sich von der Membran (109) weg zur ausgefahrenen Stellung hin erstreckt.

10. Verfahren zum Herstellen eines Bremskolbens (1) für ein pneumatisches Bremszylinderstellglied (100), insbesondere eines Bremskolbens (1) gemäß einem der Ansprüche 1 bis 9, wobei das Verfahren die folgenden Schritte umfasst:
- Bereitstellen oder Herstellen einer Kolbenstange (3) mit einer Presspassungsfläche (17),
- Bereitstellen oder Herstellen eines Kolbenkopfes (5) mit einer Buchse (7), wobei die Buchse (7) eine Presspassungsfläche (15) aufweist, und
- Zusammenfügen der Kolbenstange (3) und des Kolbenkopfes (5), sodass sich die Presspassungsflächen (15, 17) der Kolbenstange (3) und des Kolbenkopfes (5) mindestens teilweise überlappen, was zu einem Presspassungsabschnitt (23) zwischen der Kolbenstange (3) und dem Kolbenkopf (5) führt,
- Bereitstellen einer Kopfplatte (8), die eine Materialstärke T₁ im Bereich von 5 mm oder weniger aufweist,
- Hinzufügen einer Hilfsmaterialverbindung (21) zwischen der Kolbenstange (3) und dem Kolbenkopf (5) nach dem Zusammenfügungsschritt, wobei die Hilfsmaterialverbindung (21) vorzugsweise eine Schweiß-, Klebe- oder Lötnaht ist, die sich mindestens teilweise um die Kolbenstange (3) und die Buchse (5) herum erstreckt, wobei die Hilfsmaterialverbindung (21) getrennt von den Presspassungsflächen (15, 17) der Kolbenstange (3) und des Kolbenkopfes (5), vorzugsweise daran angrenzend, angeordnet ist.

## Revendications

1. Piston de frein (1) pour un actionneur de frein pneumatique (100) d'un véhicule, en particulier d'un véhicule utilitaire, le piston de frein comprenant
une tête de piston (5), et
un tige de piston (3) accouplée à la tête de piston (5),
**caractérisé en ce que** la tête de piston (5) et la tige de piston (3) sont accouplées l'une à l'autre dans une partie d'ajustement serré (23), une plaque de tête (8) ayant une épaisseur de matériau T₁ dans la plage de 5 mm ou moins, le piston de frein (1) comprenant une liaison de matériau auxiliaire (21) entre la tige de piston (3) et la tête de piston (5), la liaison de matériau auxiliaire (21) étant un cordon de soudure, de colle ou de brasage, la liaison de matériau auxiliaire (21) étant séparée de la partie d'ajustement serré (23), de préférence adjacente à celle-ci.

2. Piston de frein (1) selon la revendication 1,
la tête de piston (5) comprenant la plaque de tête (8), et une douille (7) ayant une surface intérieure d'ajustement serré (15) qui est dimensionnée de sorte qu'une surface extérieure d'ajustement serré (17) correspondante de la tige de piston (3) vienne en prise avec la douille (7) dans l'ajustement serré.

3. Piston de frein selon la revendication 2,
la douille (7) étant formée comme une saillie tubulaire s'étendant à l'opposé de la plaque de tête (8).

4. Piston de frein selon la revendication 2 ou 3,
la douille (7) et la plaque de tête (8) étant formées d'une seule pièce.

5. Piston de frein selon l'une quelconque des revendications 1 à 4,
la liaison de matière auxiliaire (21) s'étendant sur toute la circonférence autour de la tige de piston (3) et de la douille (7).

6. Piston de frein selon l'une quelconque des revendications 1 à 4,
la liaison de matériau auxiliaire (21) étant constituée d'au moins une section de liaison, chacune des sections de liaison s'étendant uniquement le long d'une partie de la circonférence autour de la tige de piston (3) et de la douille (7).

7. Piston de frein selon l'une quelconque des revendications 1 à 6,
la liaison de matériau auxiliaire (21) étant une soudure d'angle.

8. Actionneur de frein pneumatique (100) pour un véhicule, en particulier un véhicule utilitaire, comprenant
un boîtier d'actionneur (101) ayant une chambre de pression de frein (111), une chambre de piston (113), et
un piston de frein (1) qui est monté à l'intérieur de la chambre de piston (113) et conçu pour se déplacer entre une position retenue et une position étendue, **caractérisé en ce que** le piston de frein (1) est formé selon l'une quelconque des revendications précédentes.

9. Actionneur de frein pneumatique selon la revendication 8,
la chambre de pression de frein (111) étant une chambre de pression de frein de service et la chambre de piston (113) étant une chambre de piston de frein de service, et
l'actionneur de frein (100) comprenant en outre
une membrane (109) qui sépare la chambre de pression de frein (111) de la chambre de piston de frein (113) et qui est mobile élastiquement en fonction de la pression à l'intérieur de la chambre de pression de frein (111), la tête de piston (5) du piston de frein (1) venant en prise dans la membrane (109), et la tige de piston (3) s'étendant à l'opposé de la membrane (109) vers la position étendue.

10. Procédé de production d'un piston de frein (1) pour un actionneur de frein pneumatique (100), en particulier un piston de frein (1) selon l'une quelconque des revendications 1 à 9, le procédé comprenant les étapes consistant à :
fournir ou produire une tige de piston (3) ayant une surface d'ajustement serré (17),
fournir ou produire une tête de piston (5) ayant une douille (7), la douille (7) ayant une surface d'ajustement serré (15), et
accoupler la tige de piston (3) et la tête de piston (5) de sorte que les surfaces d'ajustement serré (15, 17) de la tige de piston (3) et de la tête de piston (5) se chevauchent au moins partiellement, amenant à une partie d'ajustement serré (23) entre la tige de piston (3) et la tête de piston (5),
fournir une plaque de tête (8) qui a une épaisseur de matériau T₁ dans la plage de 5 mm ou moins,
ajouter une liaison de matériau auxiliaire (21) entre la tige de piston (3) et la tête de piston (5) après l'étape d'accouplement, la liaison de matériau auxiliaire (21) étant de préférence un cordon de soudure, de colle ou de brasage s'étendant au moins partiellement autour de la tige de piston (3) et de la douille (5), la liaison de matériau auxiliaire (21) étant placée séparément des surfaces d'ajustement serré (15, 17) de la tige de piston (3) et de la tête de piston (5), de préférence à proximité de celles-ci.
